# EUROPEAN PATENT APPLICATION

(11) **EP 3 336 601 A1**
(43) Date of publication of application: **20.06.2018**
(21) Application number: 17207819.8
(22) Date of filing: 15.12.2017
(51) Int. Cl.: G03B 13/08, G03B 15/00, G03B 15/12, G03B 17/18

(54) **A PHOTO TERMINAL STAND SYSTEM**

(30) Priority: 19.12.2016 US 201662435965 P
(71) Applicant: Foto Master LLC, Chicago, Illinois 60604 (US)
(72) Inventor: TELEM, Boaz, 7403631 Ness Ziona (IL)
(74) Representative: Harrison IP Limited

(57) **Abstract**

In one aspect, the present invention is directed to a photo terminal stand system, comprising: a light-opaque case, in which a front facet thereof is a tempered one-way reflective mirror; a display, mounted behind the one-way mirror, such that a graphical presentation presented by the display is seen outside the case through the one-way mirror; a camera, mounted behind the one-way mirror, for taking a stills photo or a video sequence; an input device using an infrared touch overlay frame, for providing coordinates of the mirror on which a user touches; and a computer, configured to receive from the input device which a user touches the coordinates thereof and responsively generate the graphical presentation, and activate the camera to record an image or a video sequence, wherein the system is adapted to convert the coordinates of a point the user touches on the mirror to the coordinates of the display.

## Description

### TECHNICAL FIELD

The present invention relates to the field of photo booths.

### BACKGROUND ART

"Photo Booth is a software application for taking photos and videos with an iSight camera by Apple Inc. for macOS and iOS (on the iPad and iPad Mini available starting with the iPad 2). --- Photo Booth displays a preview showing the camera's view in real time. Thumbnails of saved photos and videos are displayed along the bottom of this window. These can be shown or played by double clicking on the thumbnails. Clicking the large red button underneath the preview area will take a picture after an optional countdown. By default, Photo Booth's live preview and captured images are reversed horizontally, to simulate the user looking into a mirror; an option provides unreversed images." (From Wikipedia)

The term **Photo Terminal Stand (PTS)** refers herein to a Photo Booth implemented on a mobile stand.

PTS systems are common entertainment accessories at large-draw facilities such as carnivals, amusement parks and playgrounds. They are also common at private events, such as weddings, corporate social functions, and shopping mall promotions. However, the widespread use of such photo booths also has led to an opinion by market participants that the market is saturated and that the standard photo booth is a commodity. This viewpoint also lowers profits of photo booth operators.

More recent PTS system designs intended to provide innovation have generally been constructed from similar components and generally look similar to older photo booth designs.

In addition, more recent PTS systems are generally limited to off-the-shelf software tools, a factor that limits the variety of hardware that can be employed.

It is an object of the present invention to provide a solution to the above-mentioned and other problems of the prior art.

Other objects and advantages of the invention will become apparent as the description proceeds.

### SUMMARY OF THE INVENTION

In one aspect, the present invention is directed to a photo terminal stand system, comprising:
a light-opaque case, in which a front facet thereof is a tempered one-way reflective mirror;
a display, mounted behind the one-way mirror, such that a graphical presentation presented by the display is seen outside the case through the one-way mirror;
a camera, mounted behind the one-way mirror, for taking a stills photo or a video sequence;
an input device using infrared touch overlay frame, for providing coordinates of the mirror on which a user touches; and
a computer, configured to (a) receive from the input device on which a user touches the coordinates thereof and (b) responsively generate the graphical presentation, and (c) activate the camera to record an image or a video sequence;
wherein the dimensions of the mirror are different than the dimensions of the display, and the system is adapted to convert the coordinates of a point the user touches on the mirror to the coordinates of the display.

Preferably, the mirror is inclined by an angle of at least five degrees from a vertical position, thereby allowing the designing photo terminal to stand at a lower height in comparison to a vertical mirror.

The system may further comprise a printer, wherein the computer is further configured to process the image and to send the image to the printer.

The system may be further configured to charge a user for using the system.

The system may be further configured to identify a user.

Preferably, the system comprises a software application for generating a workflow of the graphical presentation on the display. Steps of the workflow may be activating the camera to take a stills image or video sequence, displaying a stills image, displaying a video sequence, displaying an animation, inputting coordinates of the mirror on which a user touches, awaiting a user input, and the like.

The system may further comprise a case cover configured to connect to the case and to protect the mirror during transport.

Preferably, the system comprises wheels affixed to the case, for allowing transporting thereof.

Preferably, all interior walls of the case except the mirror are painted in black, for preventing a user from seeing an interior side of the case.

Preferably, the system comprises a set of LEDs affixed to the back of the mirror around the camera, wherein the computer is configured to light the LEDs before triggering the camera in order to mark the user on the point of the mirror behind which the camera is disposed.

According to one embodiment of the invention, the case is configured to be mounted to a wall.

According to one embodiment of the invention, the display is a computer monitor.

According to another embodiment of the invention, the display is a television screen.

According to one embodiment of the invention, the mirror has a circular or elliptical form.

According to one embodiment of the invention, the coordinates are of a plurality of points, thereby allowing touching the mirror by a plurality of fingers as pointers.

The system may further comprise a speaker, for producing an audio signal by the computer to a user.

The input device may comprise, in addition to the infrared touch overlay frame or as a substitute for the infrared touch overlay frame, an accelerometer, a gyro sensor, identification from the camera's input a movement a user does, and the like.

The input device may comprise an accelerometer in addition to the infrared touch overlay frame or as a substitute to the infrared touch overlay frame.

The system may further comprise a calibration method for generating a formula of transforming a coordinate of the mirror to a coordinate of the display, the method comprising the steps of:
- showing the entire display through the mirror;
- pointing on the four corners of the display on the mirror, such that the coordinates of the infrared touch overlay frame are detected; and
- generating a transform formula of a coordinate on the mirror to a coordinate on the display from the four points and, dimensions and resolution of the display.

The reference numbers have been used to point out elements in the embodiments described and illustrated herein, in order to facilitate the understanding of the invention. They are meant to be merely illustrative, and not limiting. Also, the foregoing embodiments of the invention have been described and illustrated in conjunction with systems and methods thereof, which are meant to be merely illustrative, and not limiting.

### BRIEF DESCRIPTION OF DRAWINGS

Preferred embodiments, features, aspects and advantages of the present invention are described herein in conjunction with the following drawings:
**Fig. 1** pictorially illustrates a PTS, according to one embodiment of the invention.
**Fig. 2** pictorially illustrates a way of moving the PTS of Fig. 1, according to one embodiment of the invention.
**Fig. 3** pictorially illustrates the back side of PTS 20 of Fig. 1, according to an embodiment of the present invention.
**Fig. 4** shows a schematic, pictorial illustration of the front side of system 20, according to an embodiment of the present invention.
**Fig. 5** is an exploded view of the components of a PTS, according to one embodiment of the invention.
**Fig. 6** schematically illustrates the elements in mapping a coordinate of the mirror into coordinates of a display, according to one embodiment of the invention.
**Figs. 7 and 8** show schematic, pictorial illustrations of a configuration platform for customizing the interactive camera mirror, according to embodiments of the present invention.

It should be understood that the drawings are not necessarily drawn to scale.

### DESCRIPTION OF EMBODIMENTS

The present invention will be understood from the following detailed description of preferred embodiments ("best mode"), which are meant to be descriptive and not limiting. For the sake of brevity, some well-known features, methods, systems, procedures, components, circuits, and so on, are not described in detail.

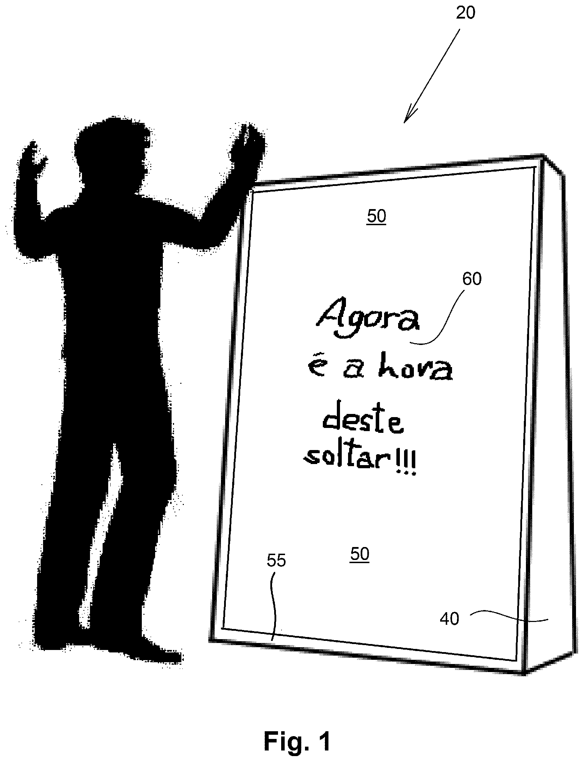

**Fig. 1** pictorially illustrates a PTS, according to one embodiment of the invention.

The PTS is marked herein by reference numeral 20. The PTS is shown as it may appear when being operated by a user 30. The site of operation is preferably an entertainment venue, such as a shopping mall, exposition, a celebration hall, and the like.

The PTS includes a "large" case 40, having a front facing mirror 50. The front side of the case is preferably inclined, with an inclination angle being at least 5 degrees and often 15 degrees from the vertical. The inclination permits people who are significantly taller than the top of the mirror to see the full length of their bodies in the mirror when standing within a few meters of the system.

Dimensions of the case of the represented embodiment are configured such that the case rests firmly on its base in an upright position on the floor. A preferable height of the case in the embodiment shown is 60", and preferable base dimensions are 37" x 23". Different configurations of the case include an elliptical or circular front, such as is typical for beauty mirrors, which may be positioned on legs or on a stand during operation.

In further alternative embodiments of the invention, mirror 50 is affixed to a case that may be permanently or semi-permanently mounted to a wall.

In still further configurations, the mirror may be detachably affixed to a wall so as to cover a niche in a wall.

The width of the case, or alternatively the wall niche, is generally configured as a minimum width necessary to include the elements of the interactive camera mirror as described hereinbelow.

When provided in a wall-mounted or wall niche configuration, the interactive camera mirror provides an especially small footprint, allowing the system to be conveniently located at sites with limited space, such as retail stores. Placement of the system in retail stores may enhance the shopping experience for the user, while also providing a social media marketing tool for the store owner.

"A one-way mirror, also called two-way mirror (or two-way glass) and semi-transparent mirror, is a reciprocal mirror that is partially reflective and partially transparent. The perception of one-way transmission is achieved when one side of the mirror is brightly lit and the other side is dark. This allows viewing from the darkened side but not vice versa. "(From Wikipedia)

The mirror is preferably a 6 mm tempered, one-way reflective mirror. In general, the mirror is at least 4 mm thick glass. The high quality mirror provides the system with an aesthetic appearance that attracts the attention of potential users. The tempering is essential since a user or a child may un-deliberately kick the mirror, and get injured.

Reference numeral 55 denotes a frame of mirror 50. The frame may be decorative. In addition, the frame may be detachable, thereby allowing replacing thereof with another frame.

In some embodiments, the frame is supplied in four pieces, for each side, each piece being individually attachable to the case by connectors supplied with the frame parts. Provision of the picture frame as individual pieces facilitates compact, secure transportation. Preferably, the frame has an appearance of carved wood or metal, or is otherwise designed to have an elegant appearance, to maintain the high aesthetic appeal of the system. The external picture frame may also be supplemented by an internal frame of lights, such as decorative LED lamps, to further enhance the appeal and to add visual cues to other events related to interaction with the system.

During operation of the PTS, various animations 60 appear on the face of mirror 50. These animations include attractive graphics to engage the user, as well as instructions to the user, and buttons and other means for eliciting user responses, including receipt of instructions from the user that trigger actions by the system. The animations displayed can be any combination of text, photos, images, videos, cartoons, graphics etc., and are preferably accompanied by sound (music and/or voice).

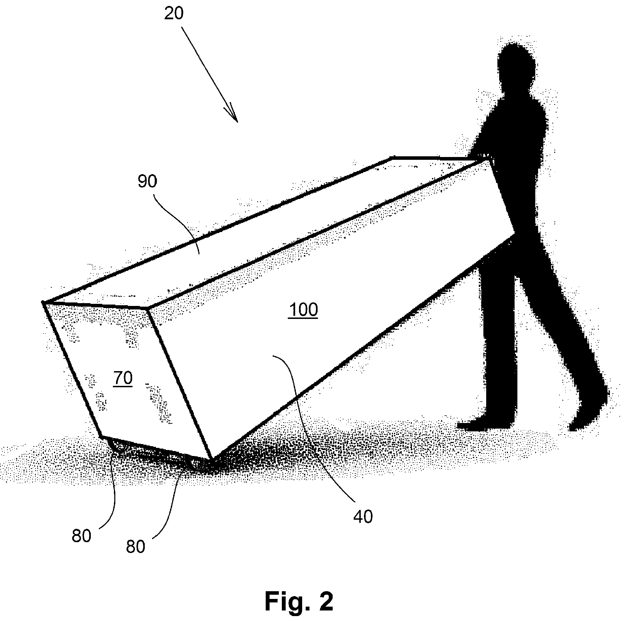

**Fig. 2** pictorially illustrates a way of moving the PTS of Fig. 1, according to one embodiment of the invention.

On one edge of the bottom side 70 of the case, wheels 80 are affixed in order to facilitate convenient transport. In additional or alternative embodiments, wheels may also be on a second edge of the bottom side, to allow transport through narrow passageways. A cover 90 is attachable to the front side of the case to protect mirror 50. Cover 90 has a hard case exterior and foam interior to protect the mirror.

Sides 100 of the case are generally trapezoidal in shape, as shown, providing the inclination on the front side as described above.

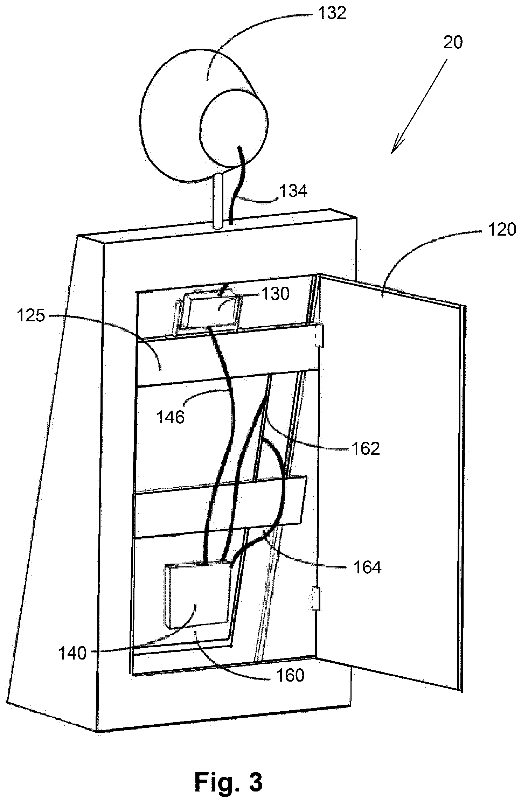

**Fig. 3** pictorially illustrates the back side of PTS 20 of Fig. 1, according to an embodiment of the present invention.

The back side has a door (or hinged panel) 120, which is shown in the figure in an open state. In this state, an operator can access components inside the case as necessary for installation and maintenance.

The interior side of the mirror must be kept dark, i.e., the case 40 must be opaque, and the mirror must be one-way. The one-way mirror is highly reflectivity only when there is no light from behind the mirror, that is, when no light can enter the interior side of the case from any side other than the mirror side. As such, during operation the door must be closed and all other openings, such as connector seals, are insulated from light intrusion, so that the interior of the case remains dark. In addition, all parts of the interior are painted black. In alternative embodiments, the hinged panel may be positioned on the side of the case 40.

A primary function of the PTS is to photograph users, a function that is enabled by a camera 130, which is mounted inside the case. Although the mirror is one-way, sufficient light can penetrate through the mirror, preferably (but not mandatory) when a flash is operated, to enable the camera to photograph through the glass of the mirror. The camera is generally a digital single-lens reflex (DSLR) camera, or other type of camera with similar specifications, wherein the specifications include a high quality lens, large sensor, and fast autofocus, as well as configurable settings for parameters such as: aperture size, shutter speed, ISO, white balance, white balance shift, photo dimensions and pixel size. The sensor has at least a 1" format and preferably an APS-C or larger format. Such cameras allow high quality pictures to be taken, despite the variable conditions of the typical setting in which the system operates, which includes a wide range of lighting conditions. The camera may shoot stills pictures and/or video sequences.

The ability to alter camera settings of white balance and shift was found to be important in order to overcome the color aberrations caused by shooting through the mirror.

Also shown in Fig. 3, there is an internal mounting bracket 125 of the PTS, which provides support for various components, including the camera.

Reference numeral 132 denotes a detachable flash head, affixed with a suitable mounting bracket on the top of the case. Also provided are suitable connectors 134 for providing power to the flash head, as well as a flash signal from the camera. The flash may be of several types, such as a 400W flash head, which may be supplemented by a beauty dish or reflector. The flash head may be mounted on top of the case, as shown, or may be mounted inside the case, on the internal bracket. When mounted inside the case, the flash is insulated in a manner such that all light is emitted through the mirror, preventing light reflected off of the inner surface of the mirror from reaching the camera shutter.

A computer 140 controls the triggering of shots by the camera, by means of a camera connector 146. For some cameras, the connection may include a "hot shot" accessory.

Additionally, the computer runs graphical software, which embeds a stills image and/or a video sequence taken by the camera in a graphical template. For example:
The graphical software may be also of a computer game which employs as input the coordinates on which a user touches the mirror, thereby using simultaneously a plurality of fingers as pointers. This allows, for example, sophisticated input such as means to rotate an object displayed on the mirror.

The computer also runs a user interface module, for allowing a user to interact through input means with the graphical software.

Computer 140 may be a desktop type PC or preferably a notebook PC (laptop), to provide greater convenience for configuration and installation. Generally the computer may be configured for graphics support, and preferably has a DX11 capable graphics adapter. Other aspects of the recommended configuration include at least 4 GB of memory and a 64 bit processor. Preferably the computer is configured with a Windows 8 (x64) operating system.

Computer 140 may be external to the case 40, but is generally installed within the case to improve security and reliability of operation. When the computer is installed internally, it is generally installed together with a large fan, which may be temperature controlled, to prevent over-heating inside the sealed case. In typical configurations, a photo printer is also installed internally in the case, or at an accompanying, external print stand.

Computer 140 is configured to control multiple operations of the system in addition to triggering the camera, these operations including sensing user interaction and/or generating the animations that from the user perspective appear on the face of the mirror, as described above. The computer may be configured to record images and video clips from the camera. The computer may be configured to send images to the printer, with or without further processing. In additional or alternative embodiments, the computer may also be configured with a direct output connection to a printer. The computer may be configured to print multiple copies of images, or print them in vertical or horizontal strips, according to user input.

The computer may also be configured to share images and video clips remotely with cloud-based channels, such as a user's email or social media channels (e.g., Twitter, Facebook, and Instagram).

The computer may be further configured such that operations, such as photographing, printing, and sharing of images, video clips and gif files, are conditional on the user being identified or performing certain tasks. For example, the system may include an RFID sensor, to identify a user by an RFID tag. The user may be required to register, which may be performed interactively through the touch or motion sensor device.

The user may be required to pay, preferably through mechanisms available through a mobile phone, such as a payment application on an iPhone or Android-based phone.

Other input and devices for output may also be connected to the computer. Sensors to recognize user input may include light and/or motion sensors, including an infrared/accelerometer combination such as the Wii Remote by Nintendo.

Output devices may include extra lighting around the mirror edges. As described above, LED lights may be affixed on the inner side of the mirror near the picture frame and may be operated by the computer to attract user attention and to signify recognition of actions by the user, such as success in a game. LED lights may also be affixed on the inner side of the mirror around the camera to attract the attention of a user to the direction in which the user should look just before a photo is taken.

Animations appearing on the mirror are generated on a TV screen, preferably flat, or a computer monitor 160. The screen / monitor is positioned behind the mirror, that is, between the mirror and the interior of the case. The monitor is connected to the computer by monitor connector 162, which generally is an HDMI connector. In addition the computer is connected to the user input device 170 by connector 164, such as a USB connector.

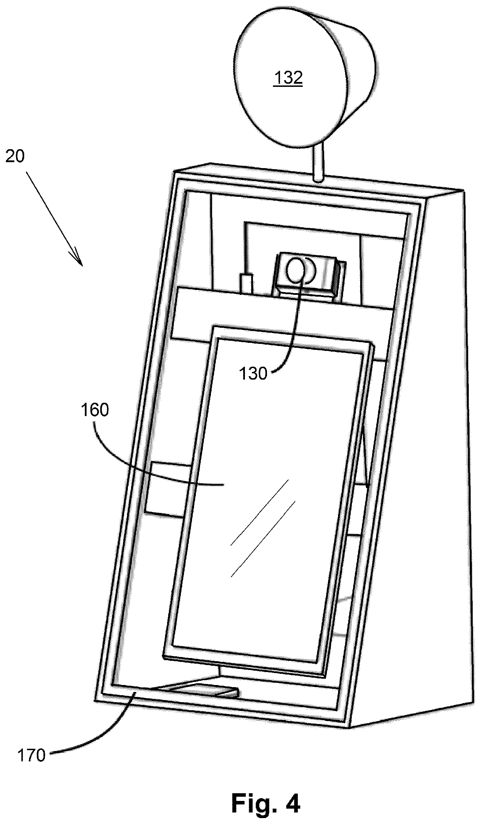

**Fig. 4** shows a schematic, pictorial illustration of the front side of system 20, according to an embodiment of the present invention.

Shown is the case with the mirror removed, thereby revealing a front view of the monitor that is mounted on the bracket within the case. The monitor is generally touching or in close proximity to the underside of the mirror. The flat screen mount is preferably implemented by the Flat Display Mounting Interface (FDMI) standard, also known as VESA Mounting Interface Standard (MIS) defined by the Video Electronics Standards Association for mounting flat panel monitors, TVs, and other displays to stands or wall mounts. In one embodiment, the mount is a VESA 200 x 200 mount.

The animations that appear on the mirror are generated on the surface of the monitor by the computer. As shown, the monitor is smaller than both the picture frame and the mirror, thereby allowing the camera, and in some embodiments, the flash, to operate within the case, above the monitor, without being blocked by the screen of the monitor. In one embodiment, the flat screen TV is a 42" or 43" screen, with black borders.

Preferably, user input is implemented by means of a touch overlay frame 170. The touch overlay frame 170 is an overlay frame, preferably an infrared (IR) multi-touch overlay such as the product available from PQ Labs. The touch overlay frame includes the connector 164, referred to above, which transmits signals related to contact points on the mirror to the computer. In alternative embodiments, a foil touch overlay is employed instead of the infrared touch overlay. The foil touch overlay covers the entire surface of the mirror and has an advantage over the infrared multi-touch overlay, which is that the foil can be provided to suit different shapes of mirror, such as an oval mirror.

In general, the user input is configured to recognize multiple, simultaneous user signals, such as multiple touches on the touch overlay frame, thereby permitting simultaneous input by multiple users, such as simultaneous "signature" signing. The photo mirror may be further configured to receive audio input from the user by means of a microphone. For example, a "screaming" game may be configured by which the animation indicates a volume of the user's voice. Alternatively or additionally, the photo mirror may receive motion input from the user, such as hand motions in the air. These signals may be received through a video motion sensor, such as a Microsoft Kinect motion sensor, or an accelerometer/infrared combination device, such as a Nintendo WII remote.

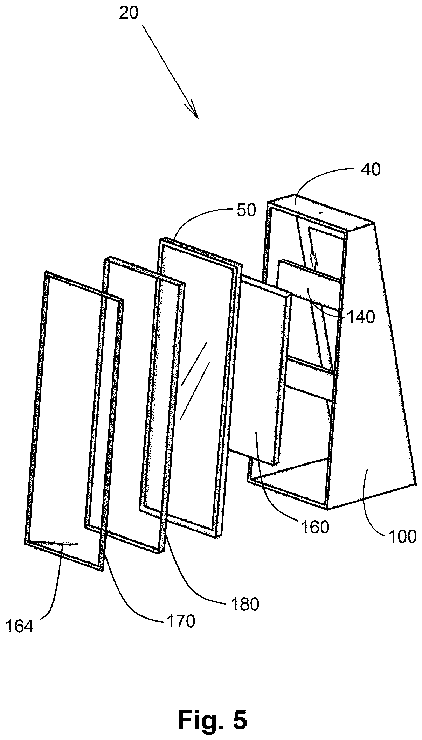

**Fig. 5** is an exploded view of the components of a PTS, according to one embodiment of the invention.

Previously noted components of the system include the case 40, the mirror 50, the case sides 100, the internal mounting bracket 125, the flat screen TV 160 and the touch overlay frame 170, and the touch device connector 164. The mirror is generally mounted to the case with a mirror mount 180.

In embodiments of the present invention, the coordinates of the mirror recognized by the touch overlay frame are calibrated by an operator upon the initial installation of the system.

As detailed hereinafter, a calibration program provides instructions on the video screen display, which is viewed by the operator through the mirror. The computer is configured to indicate the four corners of the computer display 160, which the operator then touches. The signals from the touch overlay frame are received by the computer, which is configured to maintain a correspondence between the coordinates recognized by the touch overlay frame and the corresponding points on the mirror.

In some embodiments of the present invention, the computer operates a Microsoft Windows (TM) OS, such as Windows 8. Next, the operator executes a calibration program designed for the photo mirror.

Subsequently, the operator executes the photo mirror application, which the operator has configured in advance by means of a configuration platform, described further hereinbelow. The photo mirror application displays animations on the mirror, which include instructions for user interaction.

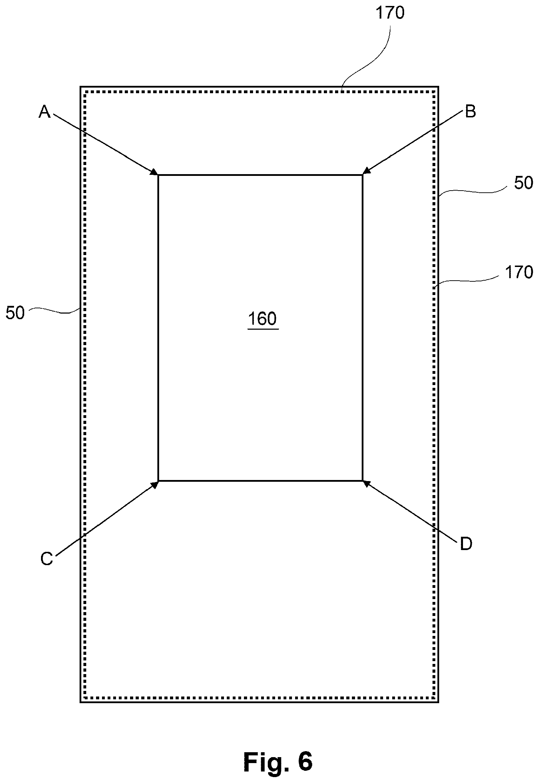

**Fig. 6** schematically illustrates the elements in mapping a coordinate of the mirror into coordinates of a display, according to one embodiment of the invention.

One of the problems a PTS must deal with is how to map the coordinates of a point of the mirror 50 into the coordinates of the point on the display 160. The problems stem from the fact that the physical dimensions of mirror 50 are greater than the dimensions of the display 160. In addition, the resolution of the touch overlay frame 170 is different than the resolution of the display 160.

The solution is a calibration which is carried out as follows: During the system setup the technician is asked to point on the four points A, B, C and D of the mirror which are the four corners of display 160. Since the dimensions of display 160 are known, this information (i.e., the coordinates of the four corners of the display frame on the mirror, i.e., on the touch overlay frame) allows mapping a point on the mirror to a point on the display. The coordinates of the mirror are detected by the touch overlay frame 170.

From this point on, when the user touches the mirror with his finger, the coordinates of the mirror) i.e., the touch overlay frame) are mapped into the coordinates of the display, so the computer can indicate in which point of the display the user has pointed.

It should be noted that the touch overlay frame can be configured to obtain multiple touch points, such as touching the mirror by a plurality of fingers.

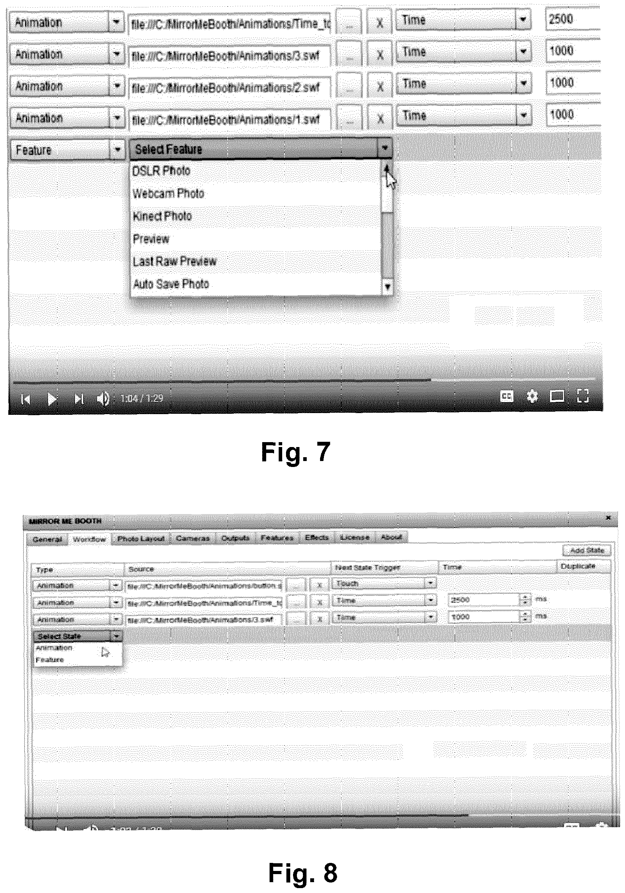

**Figs. 7 and 8** show schematic, pictorial illustrations of a configuration platform for customizing the interactive camera mirror, according to embodiments of the present invention.

As shown in Fig. 7, an operator can select a sequence of animations and features that will appear as a sequential process or workflow when an animation is displayed on site. Animations can be selected from a list of animations, which in one embodiment may include flash animations.

Fig. 8 is a screen shot of a workflow of an interactive session with a user.

The technician can set steps of the presentation on the mirror, with each step showing a certain animation and defining how to proceed. For example, the technician can set the workflow to continue to the next step when the user touches the mirror, after a time period, after camera shots, a movement made by the user, and so on.

Features of the sequence may also be output actions performed by the computer, such as triggering a photo, displaying a photo, executing an application such as a photo editing application, printing a photo, lighting LEDs, and sharing a photo over social media.

Processes associated with the system can be rearranged and/or one or more such steps can be omitted to achieve the same, or similar, results to those described herein. It is to be understood that the embodiments described hereinabove, such as particular components and dimensions of the system, are cited by way of example, and that the present invention is not limited to what has been particularly shown and described hereinabove. Rather, the scope of the present invention includes variations and modifications thereof which would occur to persons skilled in the art upon reading the foregoing description and which are not disclosed in the prior art.

In the figures and/or description herein, the following reference numerals (Reference Signs List) have been mentioned:
- numeral 20 denotes a Photo Terminal Stand (PTS), according to one embodiment of the invention;
- numeral 30 denotes a user;
- numeral 40 denotes the PTS case;
- numeral 50 denotes a mirror of PTS 20;
- numeral 55 denotes a frame of mirror 50;
- reference numeral 60 denotes a computer presentation on the mirror 50, such as an animation, image, and the like;
- reference numeral 70 denotes a bottom side of case 40;
- reference numeral 80 denotes the wheels of the case;
- reference numeral 90 denotes a cover of the case;
- numeral 100 denotes a side (left / right) of case 40;
- numeral 120 denotes a door or hinged panel;
- numeral 125 denotes a mounting bracket installed inside case 40;
- numeral 130 denotes a camera;
- numeral 132 denotes a detachable flash head;
- numeral 134 denotes connectors for providing power to the flash head;
- numeral 140 denotes a computer;
- numeral 146 denotes a camera connector (wires that connect the camera 130 to the computer 140;
- numeral 160 denotes a display, which can be a computer monitor, a television, and the like;
- numeral 162 denotes a monitor connector (wires that connect the monitor to the computer 140);
- numeral 164 denotes a connector of the user input device 170 to the computer, such as a USB connector;
- numeral 170 denotes a touch overlay frame, as an example of a user input device; and
- numeral 180 denotes a mirror mount.

The foregoing description and illustrations of the embodiments of the invention has been presented for the purposes of illustration. It is not intended to be exhaustive or to limit the invention to the above description in any form.

Any term that has been defined above and used in the claims, should to be interpreted according to this definition.

The reference numbers in the claims are not a part of the claims, but rather used for facilitating the reading thereof. These reference numbers should not be interpreted as limiting the claims in any form.

## Claims

1. A photo terminal stand system, comprising:
a light-opaque case, in which a front facet thereof is a tempered one-way reflective mirror;
a display, mounted behind the one-way mirror, such that a graphical presentation presented by the display is seen outside the case through the one-way mirror;
a camera, mounted behind the one-way mirror, for taking a stills photo or a video sequence;
an input device using infrared touch overlay frame, for providing coordinates of the mirror on which a user touches; and
a computer, configured to (a) receive from the input device on which a user touches the coordinates thereof and (b) responsively generate the graphical presentation to be displayed on said display, and (c) activate the camera to record an image or a video sequence;
wherein dimensions of the mirror are greater than dimensions of the display, and the system is adapted to convert the coordinates of a point the user touches on the mirror to the coordinates of the display.

2. The system of claim 1, wherein the mirror is inclined by an angle of at least five degrees from a vertical position, thereby allowing designing thereof at a lower height in comparison to a vertical mirror.

3. The system of claim 1 or 2, further comprising a printer, wherein the computer is further configured to process the image and to send the image to the printer.

4. The system of claims 1 to 3, further configured to charge a user for using the system.

5. The system of any preceding claim, further configured to identify a user.

6. The system of any preceding claim, further comprising software for generating a workflow of the graphical presentation on the display.

7. The system of claim 6, wherein steps of the workflow are selected from a group consisting of: activating the camera to take a stills image or video sequence, displaying a stills image, displaying a video sequence, displaying an animation, inputting coordinates of the mirror on which a user touches, awaiting for a user input.

8. The system of any preceding claim, further comprising a case cover configured to connect to the case and to protect the mirror during transport.

9. The system of any preceding claim, further comprising wheels affixed to the case, for allowing transporting thereof.

10. The system of any preceding claim, wherein all interior walls of the case except the mirror are painted black, for preventing a user from seeing an interior side of the case.

11. The system of any preceding claim, further comprising a set of LEDs affixed to the back of the mirror around the camera, wherein the computer is configured to light the LEDs before triggering the camera in order to mark the user on the point of the mirror behind which the camera is disposed.

12. The system of any preceding claim, wherein the case is configured to be mounted to a wall.

13. The system of any preceding claim, wherein the display is a computer monitor.

14. The system of any preceding claim, wherein the display is a television screen.

15. The system of any preceding claim, wherein the mirror has a circular or elliptical form.

16. The system of any preceding claim, wherein the coordinates are of a plurality of points, thereby allowing touching the mirror by a plurality of fingers as pointers.

17. The system of any preceding claim, further comprising a speaker, for producing an audio signal to a user.

18. The system of any preceding claim, wherein the input device comprises, in addition to the infrared touch overlay frame or as a substitute for the infrared touch overlay frame, a member of a group consisting of: an accelerometer, a gyro sensor, identification of a movement a user does from the camera's input.

19. The system of any preceding claim, further comprising a calibration method for generating a formula of transforming a coordinate of the mirror into a coordinate of the display, the method comprising the steps of:
- showing the entire display through the mirror;
- pointing on the four corners of the display on the mirror, such that the coordinates of the infrared touch overlay frame are detected; and
- generating a transform formula of a coordinate on the mirror to a coordinate on the display from the four points and, dimensions and resolution of the display.
